(19) Europäisches Patentamt
European Patent Office
Office européen des brevets

(11) **EP 3 557 729 B1**

(12) **EUROPEAN PATENT SPECIFICATION**

(45) Date of publication and mention
of the grant of the patent:
**24.03.2021 Bulletin 2021/12**

(51) Int Cl.:
***H02J 50/00*** *(2016.01)*    ***H02J 50/10*** *(2016.01)*

(21) Application number: **18192042.2**

(22) Date of filing: **31.08.2018**

(54) **POWER NETWORK DEVICE**

STROMNETZVORRICHTUNG

DISPOSITIF DE RÉSEAU DE PUISSANCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.04.2018 EP 18168232**
**08.06.2018 US 201816003360**

(43) Date of publication of application:
**23.10.2019 Bulletin 2019/43**

(73) Proprietor: **Siemens Aktiengesellschaft**
**80333 München (DE)**

(72) Inventors:
• **BARAIYA, Vijay Kumar**
**560001 Bangalore (IN)**
• **BHAMIDIPATI, Suryanarayana**
**560066 Bangalore, Karnataka (IN)**

• **DEOKAR, Chetan Sharad**
**560076 Bangalore (IN)**
• **VENKATESWARAN, Sornam Viswanathan**
**560084 Bangalore, Karnataka (IN)**
• **VENKATRAMANI, Anand**
**560076 Bangalore (IN)**
• **ISSANI, Siraj**
**560017 Bangalore, Karnataka (IN)**

(74) Representative: **Patentanwaltskanzlei WILHELM & BECK**
**Prinzenstraße 13**
**80639 München (DE)**

(56) References cited:
**US-A1- 2015 091 385    US-A1- 2016 049 800**
**US-A1- 2016 209 454    US-A1- 2017 179 732**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a physically compact power network device. More particularly, the present invention relates to a wireless fault detection and indication device powered by an electromagnetic energy harvesting system having an increased range of operation and high measurement accuracy.

Typically, sensors are deployed in many regions of a power grid to sense the voltage and the current of transmission lines. A primary functionality of these sensors is to detect faults so that fault localization time is reduced thus reducing downtime of grids. Downstream sections of the grids carry very low currents, for example, about 3A whereas the upstream sections carry high currents up to about 600A. During occurrence of a fault, this current may go up to 1800A. These fault sensors thus, need to measure and operate with a wide dynamic range and are required to be designed so as to maximize power at lower line currents and minimize power as well as resultant heating at higher line currents. Conventional methods and systems limit power transfer at higher line currents by employing range extenders that limit voltage. However, these are suited for DC sources and their operation is largely temperature dependent thereby, rendering them inefficient for power constrained devices that may involve component variations. Moreover, these power network devices need to operate with a high reliability, for example having a functional life greater than ten years without maintenance for the entire duration of functional life since removing and reinstalling affects the quality of grids.

Furthermore, these fault sensors are mounted on existing transmission lines, due to which the fault data needs to be wirelessly transmitted to a base station. Moreover, as these sensors are mounted on existing transmission lines without disconnecting the lines to slide in the sensors, a flux concentrator core of the sensor, that harvests power from the transmission lines, has to be of a split configuration so as to form a clamp around the transmission line and enclose line current thereby, creating an air gap in the core. Such power being harvested is heavily dependent on the air gap as well as the mechanical variations associated with remote manual mounting onto the transmission lines. The harvested power is directly proportional to square of the line current flowing through it and therefore, demands a flux concentrator large enough to extract minimum power required for operating the sensor at the downstream sections of the grid. The harvested power needs to support the measurement of parameters as well as processing of the measurements. However, when the line current is high, power dissipation in the sensor increases thereby, producing a challenge for heat dissipation together with a wide dynamic range of operation.

Achieving high accuracy measurements with the aforementioned power network devices that harvest energy electromagnetically from the line current poses a power consumption challenge. This in turn puts constraints on quantity, quality, and topologies of components that can be included in the electronics associated with such power network devices. Conventional methods and systems address the accuracy and component design challenge by employing multi-stage amplification or multiple amplifiers in parallel. However, this calls for higher number of components resulting in increased power consumption and costs associated with the design. Moreover, there is a possibility of errors increasing in cascade when multi-stage amplification is employed.

From document US 2017/179732 A1 dynamic tuning harvesting energy from current transformers is known.

Therefore, it is an object of the present invention to provide a power network device of the aforementioned kind that offers a wide dynamic range of operation with high measurement accuracy without increasing costs and design complexity associated therewith.

The present invention disclosed herein achieves the aforementioned object by providing a power network device physically disposable on a current carrying conductor and comprising at least a sensor module, a processor, and a power harvesting module in operable communication with one another. The power harvesting module comprises an impedance regulation module, a dynamic burden impedance, and a voltage limiting module, as defined in the independent claim 1. The power network device disclosed herein harvests power from the current carrying conductor. According to an embodiment of the present invention, the current carrying conductor refers to a power line such as an overhead line or an underground cable of an electric grid, that is, a power transmission network and/or a power distribution network. According to an embodiment of the present invention, the power network device is a fault sensor indicator device. According to other embodiment of the present invention, the power network device is any device that detects and/or indicates a condition associated with the power network and is powered using electromagnetic energy harvesting, that is, using the line current flowing in the power lines.

The sensor module measures one or more parameters associated with the current carrying conductor. The sensor module comprises a flux concentrator and at least one coil wound on the flux concentrator to measure the parameters. The parameters comprise, for example, a line current and a line voltage associated with the current carrying conductor. The processor detects a condition in the power network based on the parameters, sensed by the sensor module. The condition comprises, for example, a fault such as a line to line fault, a line to earth fault, a short circuit fault, etc., an unbalance in one or more of the parameters when compared to prescribed grid operating limits such as unbalance line voltage, unbalance line current, unbalance line phase, etc., isolation of a part of the power network, etc. The processor refers to any one of microprocessors, central processing unit (CPU) devices, finite state machines, microcontrollers, digital signal processors, an application specific integrated circuit (ASIC), a field-programmable gate array (FPGA), etc.,

or any combination thereof, capable of executing computer programs or a series of commands, instructions, or state transitions. The processor may also be implemented as a processor set comprising, for example, a general purpose microprocessor and a math or graphics coprocessor. The term processor is not used as a limiting term and may extend to a controller or a microcontroller.

According to an embodiment of the present invention, the power network device comprises an indicator module that indicates the condition, for example, via an audio signal, an audio-visual signal, a visual signal, etc., such as by flashing light emitting diodes. According to an embodiment of the present invention, the power network device comprises a communication module communicating the condition and/or the parameters to an external system such as a communication hub at a substation. The communication module, for example, employs a Zigbee communication protocol.

The power harvesting module harvests an induced voltage proportional to the line current, and generates power for powering one or more modules of the power network device, for example, at least the processor. The power harvesting module comprises a flux concentrator and at least one coil wound on the flux concentrator to harvest the induced voltage proportional to the line current. The flux concentrator converts electrical energy being harvested from a line current flowing in the current carrying conductor into magnetic energy in form of an electromagnetically induced flux. The coil wound on the flux concentrator, then converts this magnetic energy into an electrical equivalent in form of an induced voltage which in turn is used to generate power for powering one or more modules of the power network device. The coil is configured as an induction coil comprising a wire wound around the flux concentrator. In an embodiment of the present invention, the flux concentrator comprises a magnetic core. In another embodiment of the present invention, the flux concentrator comprises a non-magnetic core thereby producing an air-core flux concentrator. The coil couples an induced voltage proportional to a line current flowing in the current carrying conductor, for powering a load. Sinusoidally time-varying current flows in the current carrying conductor producing time-varying magnetic fields around the conductor. Windings of the coil positioned proximal to the current carrying conductor couple with the time-varying magnetic fields thereby producing an induced voltage therewithin. According to the present invention, the flux concentrator with the wound coil comprises a reactive component and the coil comprises a resistive component.

The impedance regulation module of the power harvesting module dynamically regulates impedance in the power harvesting module for controlling transfer of power harvested using the induced voltage and the line current to the processor, the indicator module, and the parameter conditioning module. As used herein, the term "impedance" refers to a source impedance seen by the power harvesting module due to the flux concentrator and the coil of the power network device. For a time-varying sinusoidal current flowing in the current carrying conductor, a source impedance $Z_{source}$ is calculated as sum of a reactance $X_{cc}$ offered by an inductive and/or a capacitive component of the wound coil with the flux concentrator, and a resistance $R_{Coil}$ of the coil. The power harvesting module harvests power using the induced voltage and the line current which are in turn affected by the source impedance $Z_{source}$. The impedance regulation module comprises a compensating impedance at least partially nullifying a reactance of a coil, that is, $X_{cc}$ of the power harvesting module when the power harvested is less than a predefined power threshold. Thus, the impedance regulation module dynamically regulates the source impedance $Z_{source}$. The compensating impedance of the impedance regulation module is selected based on the coil such that, a reactance $X_C$ of the compensating impedance at least partially nullifies the reactance $X_{CC}$ of the wound coil. Advantageously, the compensating impedance is in resonance with the source impedance $Z_{source}$, thereby, reducing the source impedance $Z_{source}$ to a resistive component $R_{Coil}$ of the coil. This leads to maximum harvested power being transferred from the power harvesting module.

The impedance regulation module comprises a switching module and a power detection module in operable communication with the compensating impedance. The power detection module detects the power harvested based on the induced voltage and the line current $I_L$. Advantageously, the power detection module detects the power in real time. The power detection module at least partially includes the compensating impedance, in communication with the switching module, when the power harvested is less than a predefined power threshold. The switching module is an electronically controlled switch, for example, a relay whose coil is the control element, a solid state relay whose photodiode is the control element, etc. According to an embodiment of the present invention, the compensating impedance comprises two or more capacitors connected in series. In this embodiment, the power detection module along with the switching module includes one or more of the series connected capacitors into the power harvesting module. The power detection module excludes the compensating impedance when the power harvested is greater than a predefined power threshold and/or equal to the predefined power threshold. By excluding the compensating impedance, the power harvesting module ensures safety of the downstream electronics, thereby, increasing a range of harvesting of power from a varying line current while ensuring that power is limited within a prescribed range of safe operation of load connected thereto. The power threshold is defined based on power requirements of the load being driven by the power harvesting module and the input power available from the line current flowing in the current carrying conductor.

The dynamic burden impedance of the power harvesting module is configured as a variable load regulating an output voltage of an impedance regulation module of the power harvesting module, based on a predefined voltage threshold to maintain flux induced in the power harvesting module. The dynamic burden impedance includes a voltage reference module and a dynamic impedance module in operable communication with one another. The voltage reference module defines the predefined voltage threshold for regulating the output voltage of the impedance regulation module. The predefined voltage threshold is selected based on one or more properties of the flux concentrator and the coil of the power harvesting module, including for example, a material and a geometry of the flux concentrator and winding elements, a saturation limit of the flux concentrator, and the output voltage of the impedance regulation module. The dynamic burden impedance comprises at least one power transistor selected based on the predefined voltage threshold.

The voltage limiting module of the power harvesting module regulates an output voltage of the power harvesting module, based on a predefined load voltage threshold to protect one or more modules of the power harvesting module. The voltage limiting module employs a hardware impedance control module that regulates the output voltage by increasing and decreasing overall impedance of the power harvesting module based on the load voltage threshold. The load voltage threshold is defined based on power requirements of the load being powered. Advantageously, the dynamic burden impedance and the voltage limiting module are configured such that the dynamic burden impedance is a shunt voltage limiter allowing lower voltages, for example, lesser than or equal to about 80V to be applied downstream and the voltage limiting module is a series voltage limiter allowing voltages lesser than or equal to about 20V to be applied downstream.

The power harvesting module disclosed herein is configured as a linear mode power supply, comprising the impedance regulation module, the dynamic burden impedance, and the voltage limiting module. According to an embodiment of the present invention, the power harvesting module comprises a current limiter having for example, at least one power transistor. The current limiter protects the impedance regulation module from high line currents.

Advantageously, the power harvesting module disclosed herein restricts heating of the power network device by achieving maximum power transfer at lower induced voltages and limited power transfer at higher induced voltages. The power harvesting module configured as the linear mode power supply also restricts noise generated in the power network device, allowing closer positioning of the sensor module and the power harvesting module, thereby resulting in a physically compact power network device. The power network device disclosed herein includes a thermally conducting, that is, a metal enclosure.

The power network device comprises a parameter conditioning module dynamically conditioning the parameters. The parameter conditioning module in communication with the processor, dynamically amplifies the parameters using an amplifier module based on one or more properties of a flux concentrator of the sensor module. The properties comprise, for example, a saturation limit of the flux concentrator. The amplifier module is a single stage amplifier module configurable for a predefined range of amplification factors. The amplification factors are defined corresponding to the line current ranging from about 3A to about 1800A. Advantageously, the parameters especially corresponding to lower line currents, for example, from about 2A to about 40A, when amplified by the parameter conditioning module, remain unaffected by noise and other distortions if any, in the power harvesting module, thereby, increasing accuracy of measurement of the parameters. The parameter conditioning module selects a maximum amplification factor, that is, a highest gain band by default, and verifies whether the flux concentrator core of the sensor module has saturated as a result of the amplified parameter. If yes, the parameter conditioning module reduces the amplification factor, for example, to a next lower factor, else uses the same to amplify the measured parameters for further processing by the processor. Advantageously, the parameter conditioning module employs a single stage amplifier configurable with one or more of the predefined amplification factors, for dynamically measuring a wide range of parameters without affecting accuracy associated therewith and eliminating calibration requirements associated with changes in the line current once installed thereby, achieving lower power consumption and lower operational costs.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:

FIG 1          illustrates a block diagram of a power network device, according to an embodiment of the present invention.

FIG 2A          illustrates a block diagram of a power harvesting module of the power network device shown in FIG 1, comprising an impedance regulation module, a dynamic burden impedance, and a voltage limiting module, according to an embodiment of the present invention.

FIG 2B          illustrates an electrical equivalent circuit diagram of the impedance regulation module shown in FIG 2A.

FIGS 2C-2D          illustrate a block diagram and an electrical equivalent circuit diagram of the dynamic burden impedance shown in FIG 2A.

FIG 2E          illustrates a graphical representation of voltage waveforms associated with an output voltage of the dynamic burden impedance shown in FIGS 2C-2D.

FIG 2F-2G    illustrate a block diagram and an electrical equivalent circuit diagram of the voltage limiting module shown in FIG 2A.

FIG 3    illustrates an electrical equivalent circuit diagram of a parameter conditioning module of the power network device shown in FIG 1.

FIG 4    is a process flow chart illustrating a method for dynamically conditioning one or more parameters measured by the power network device shown in FIG 1.

Various embodiments are described with reference to the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

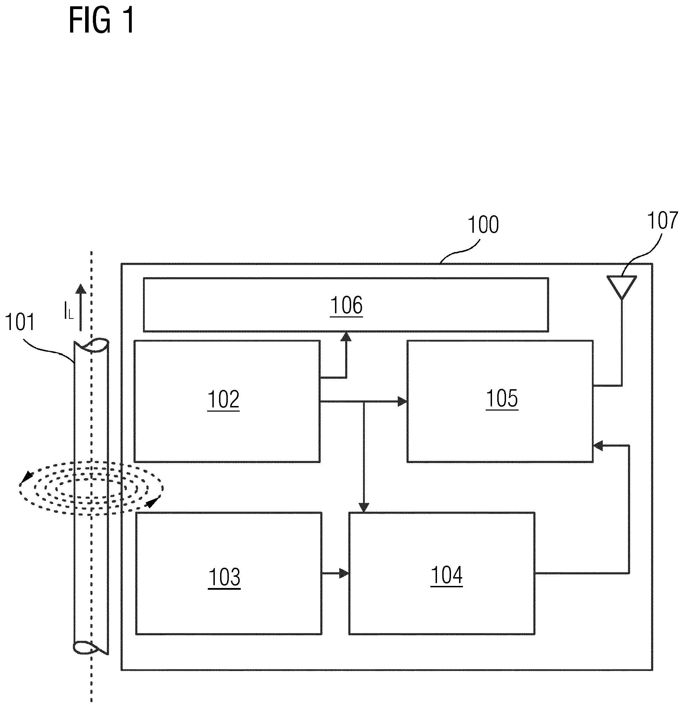

FIG 1 illustrates a block diagram of a power network device 100, according to an embodiment of the present invention. The power network device 100 is physically disposable on a current carrying conductor 101. The current carrying conductor 101 carries a line current $I_L$ therewithin creating a magnetic field around itself in the direction shown in FIG 1. The power network device 100 comprises a power harvesting module 102, a sensor module 103, a parameter conditioning module 104, a processor 105, an indicator module 106, and a communication module 107 in operable communication with one another. The power network device 100 further comprises an energy storage module (not shown), for example, a battery to store the power being harvested by the power harvesting module 102. The power harvested is used for powering one or more of the processor 105, the parameter conditioning module 104, the indicator module 106, and the communication module 107, of the power network device 300.

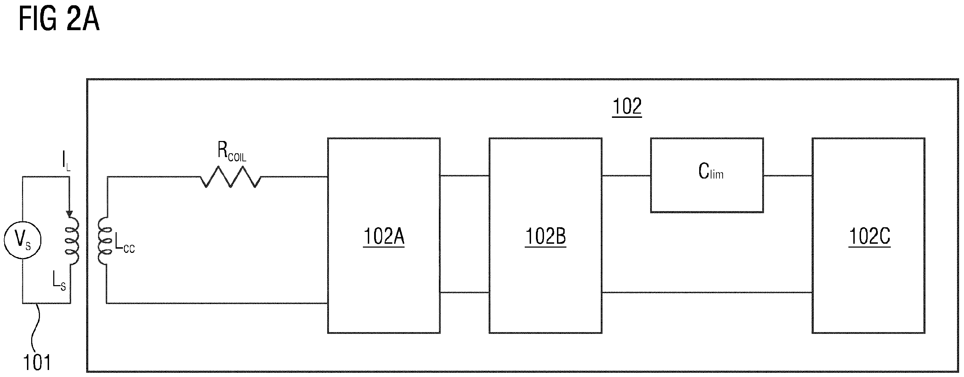

FIG 2A illustrates a block diagram of a power harvesting module 102 of the power network device 100 shown in FIG 1, comprising an impedance regulation module 102A, a dynamic burden impedance 102B, and a voltage limiting module 102C, according to an embodiment of the present invention. The power harvesting module 102 comprises a flux concentrator such as a magnetic/non-magnetic core and a coil wound around the flux concentrator. The inductance $L_{CC}$ represents an inductance of the flux concentrator and the wound coil whereas the resistance $R_{Coil}$ represents a resistance of the wound coil. The flux concentrator with the coil wound around it is positioned near a bare or an insulated current carrying conductor 101. For example, the flux concentrator is positioned surrounding the current carrying conductor 101 such that the current carrying conductor 101 passes through the flux concentrator, that is, through an air gap created within a core of the flux concentrator. The magnetic field created around the current carrying conductor 101 shown in FIG 1, is coupled with the coil wound around the flux concentrator thereby, inducing a flux in the flux concentrator. The current carrying conductor 101 is represented by an electrical equivalent circuit having a source voltage $V_S$ and an inductor $L_S$ through which a line current $I_L$ flows. The induced flux when coupled with the coil wound on the flux concentrator, produces an induced voltage $V_{ind}$ across the coil which is in turn is applied to the impedance regulation module 102A. The power harvesting module 102 also comprises a current limiter $C_{lim}$ which comprises a power transistor such as a MOSFET and/or a resistor that protects the impedance regulation module from overcurrent conditions.

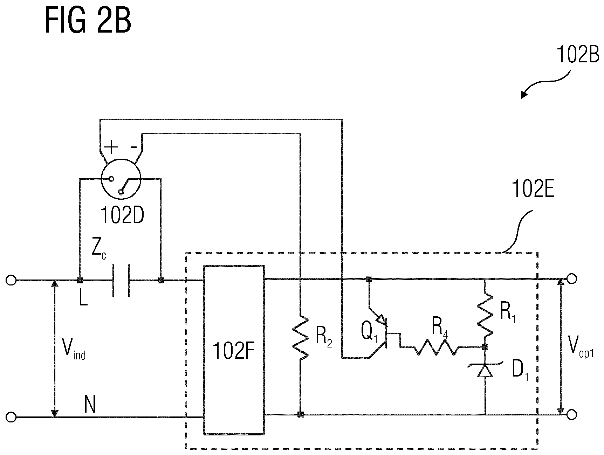

FIG 2B illustrates an electrical equivalent circuit diagram of the impedance regulation module 102A shown in FIG 2A. The impedance regulation module 102A controls transfer of power being harvested by the power harvesting module 102 using the induced voltage $V_{ind}$ and the line current $I_L$, to the load connected thereto, that is, to one or modules of the power network device 100 shown in FIG 1. The impedance regulation module 102A comprises a switching module 102D, a power detection module 102E, and a compensating impedance $Z_c$.

The impedance regulation module 102A operates in two states. First state of operation is when the power harvested based on the induced voltage $V_{ind}$ and the line current $I_L$, is lesser than a predefined power threshold $P_T$ and second state of operation is when the power harvested is greater than or equal to the predefined power threshold $P_T$. In the first state of operation, the power detection module 102E keeps the switching module 102D de-activated. The compensating impedance $Z_c$ remains to be connected in series with the $R_{Coil}$. A reactive component $X_C$ of the compensating impedance $Z_c$ is in resonance with the reactive component $X_{cc}$ defined by the wound coil inductance $L_{CC}$, thereby reducing effective source impedance $Z_{source}$ of the power harvesting module 102 equal to the coil resistance $R_{Coil}$, as given in the equation below:

$$Z_{source} = R_{Coil}$$

This ensures maximum power transfer to load when the induced voltage $V_{ind}$ is below a predefined power threshold.

In the second state of operation, the power detection module 102E detects that the power harvested based on the induced voltage $V_{ind}$ and the line current $I_L$, has equaled or exceeded the predefined power threshold $P_T$. The power detection module 102E activates the switching module 102D such that the compensating impedance $Z_c$ is bypassed, thereby making the effective source impedance $Z_{source}$ dependent on the coil resistance $R_{Coil}$ and the wound coil inductance $L_{CC}$, as given by the equation below:

$$Z_{source} = \sqrt{(R_{Coil}^2 + X_{CC}^2)}$$

Where $X_{CC} = 2\Pi f (L_{CC})$ and f is the frequency of operation, for example, 50Hz.

The power detection module 102E comprises a rectifier 102F, a transistor Q1, and a diode D1. The rectifier 102C converts an AC waveform of the induced voltage $V_{ind}$ into a single ended voltage waveform which is compared with a bypass voltage $V_{byp}$. The bypass voltage $V_{byp}$ is a voltage required for activating the switching module 102A. The bypass voltage $V_{byp}$ is set based on the predefined power threshold $P_T$. For example, if the load being powered by the power harvesting system 100 has an operating power range of up to $P_T$ Watts then the bypass voltage $V_{byp}$ is selected such that the switching module 102D activates as soon as the bypass voltage $V_{byp}$ becomes equal to or greater than $P_T/I_L$, in order to ensure the power being transferred to the load is within the predefined power threshold $P_T$. The impedance regulation module 102A at any time instant maintains power harvested less than the predefined power threshold $P_T$, that is, to maintain the induced voltage $V_{ind}$ less than $P_T/I_L$.

In order to set the bypass voltage $V_{byp}$ according to the predefined power threshold $P_T$ the diode D1 and the transistor Q1 are selected such that:

$$V_{byp} = V_{ref} + V_{BE}$$

Where $V_{BE}$ is the cut-off voltage for the transistor Q1 to conduct and $V_{ref}$ is the voltage required for the diode D1 to forward bias. When the induced voltage $V_{ind}$ becomes equal to the base emitter voltage $V_{BE}$, the transistor Q1 conducts. Further as the induced voltage $V_{ind}$ increases to equal sum of the base emitter voltage $V_{BE}$ and the voltage $V_{ref}$, which is equal to the set bypass voltage $V_{byp}$, a control element of the switching module 102D activates, thereby bypassing the compensating impedance $Z_c$ and increasing the effective source impedance $Z_{source}$, given by the equation below:

$$Z_{source} = \sqrt{(R_{Coil}^2 + X_{CC}^2)}$$

The increase in source impedance $Z_{source}$ thus, limits the power being transferred to the load.

When the induced voltage $V_{ind}$ starts decreasing and becomes lesser than the bypass voltage $V_{byp}$ the switching module 102D gets de-activated. The induced voltage $V_{ind}$ decreases further to equal the base emitter voltage $V_{BE}$, the diode D1 comes out of its forward bias operation region. The induced voltage $V_{ind}$ decreases further below the base emitter voltage $V_{BE}$, the transistor Q1 stops conducting, thereby bringing the compensating impedance $Z_C$ back in connection thereby, decreasing the effective source impedance $Z_{source}$, given by the equation below:

$$Z_{source} = R_{Coil}$$

The decrease in source impedance $Z_{source}$ thus, increases the power being transferred to the load.

Thus, the impedance regulation module 102A, detects power available at the source using current and/or voltage signatures, that is, the line current $I_L$ and the induced voltage $V_{ind}$, and based on this detected power, dynamically changes source impedance $Z_{source}$ to create a resonance effect and increase power transferred to load at lower operating points, whereas decrease power transferred to load at higher operating points, thereby, increasing a range of operation, reducing overall weight, as well as stress experienced by downstream loads connected to the power harvesting module 102.

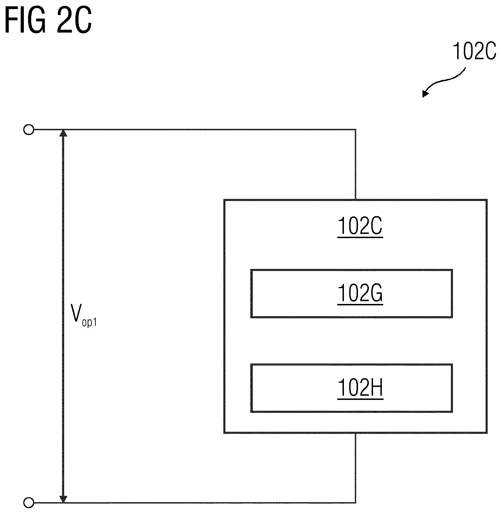

FIGS 2C-2D illustrate a block diagram and an electrical equivalent circuit diagram of the dynamic burden impedance 102B shown in FIG 2A. FIG 2C illustrates a block diagram of the dynamic burden impedance 102B, wherein, a voltage $V_{op1}$, which is the output voltage of the impedance regulation module 102A shown in FIGS 2A, 2B, is applied across the dynamic burden impedance 102B. The dynamic burden impedance 102B comprises a voltage reference module 102G and a dynamic impedance module 102H in operable communication with each other. The dynamic burden impedance 102B acts a variable load in the power harvesting module 102 in order to maintain a constant output voltage $V_{op1}$ irrespective of changes in the line current $I_L$ and the induced voltage $V_{ind}$. This is achieved by shunting the increased current using the dynamic burden impedance 102B, thereby regulating flux induced in the core of the flux concentrator.

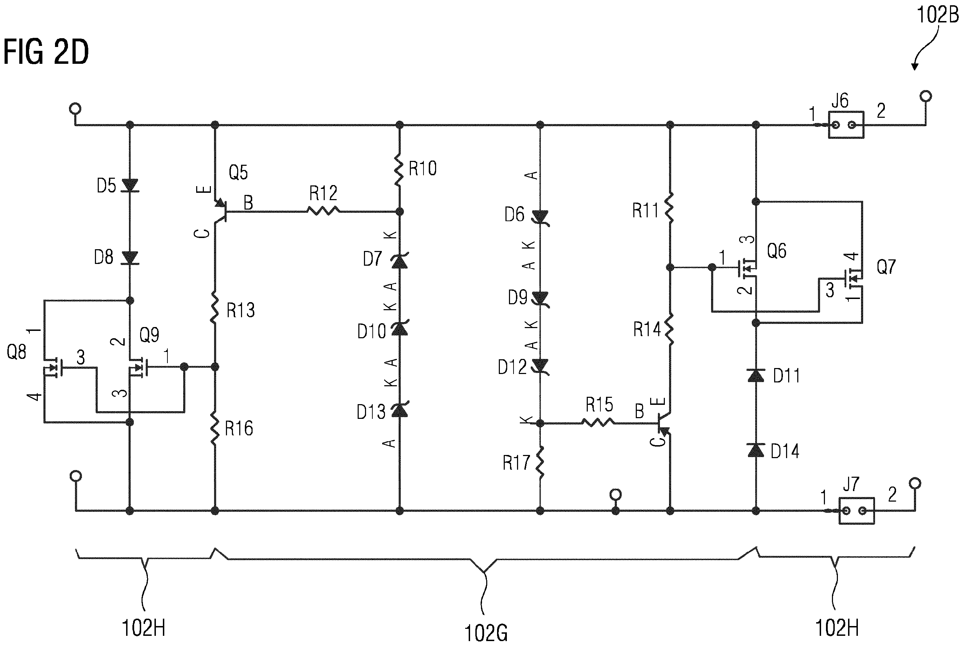

FIG 2D illustrates an electrical equivalent diagram of the dynamic burden impedance 102B including the voltage reference module 102G and the dynamic impedance module 102H. The voltage reference module 102G includes Zener diodes D7, D10, D13, D6, D9 and D12 used to set a voltage threshold, that is, a limiting value at which the output voltage $V_{op1}$ is to be regulated. Quantity of the Zener diodes and their ratings may be customized based on the voltage threshold required to be set. The voltage threshold is defined based on downstream electronics which is connected and/or powered by the power harvesting module 102. The dynamic impedance module 102H includes power transistors, that is, MOSFETs Q8, Q9 and Q6, Q7. Each of the pairs of these MOSFETs are connected to the Zener diodes D7, D10, D13 and D6, D9, D12 via PNP transistors Q5 and Q10 for operation in positive cycle and negative cycle respectively. During a positive cycle of operation, when an input voltage, that is, the secondary voltage, rises above the voltage threshold defined by a combined breakdown voltage of the Zener diodes D7, D10, and D13, and the $V_{BE}$ drop of the PNP transistor Q5, then the Q5 conducts. Thus, the voltage threshold is defined by the equation given below:

$$V_{threshold} = V_{Zener} + V_{BE}$$

With this a proportional current flows on the collector of Q5 increasing the $V_{GS}$ voltage of the MOSFETs Q8 and Q9. As this $V_{GS}$ voltage increases, the $R_{DS}$ of the MOSFETs decrease. As $R_{DS}$ decreases additional current is drawn from the source, thereby, increasing drop across source, resulting, in a decrease in the voltage across the Zener diodes D7, D10, and D13, and therefore the $V_{BE}$ of the PNP transistor Q5, thereby reducing, the collector current of Q5 and $V_{GS}$ voltage of the MOSFETs Q8 and Q9. As this $V_{GS}$ voltage decreases, the $R_{DS}$ of the MOSFETs increases thereby, reducing current drawn from the source. This in turn reduces the drop across source, thus, bringing back the operation state to an original state. The dynamic burden impedance thus limits the output voltage $V_{op1}$ applied downstream. The additional current is mainly drawn by the MOSFETs Q8 and Q9 which are power devices and hence, are capable of handling larger power as compared to the Zener diodes D7, D10, and D13. The operation explained here is for the positive cycle operation and the negative cycle operation is the same with polarities reversed where the Zener diodes D6, D9, and D12 along with the PNP transistor Q10 and MOSFETs Q6 and Q7 come into operation. Thus, the dynamic impedance module 102H employs power MOSFETs Q7, Q8, Q9, and Q10, as dynamic burden resistors and regulates output voltage $V_{op1}$ by changing $V_{GS}$ of the MOSFETs in comparison to the voltage threshold set using high precision low power Zener diodes D7, D10, D13, D6, D9, and D12. By dynamically changing the burden impedance and thereby drawing additional current from the source, an additional voltage drop across source impedance is created which acts as a negative feedback control system thereby, avoiding flux increase and saturation of the flux concentrator of the power harvesting module 102.

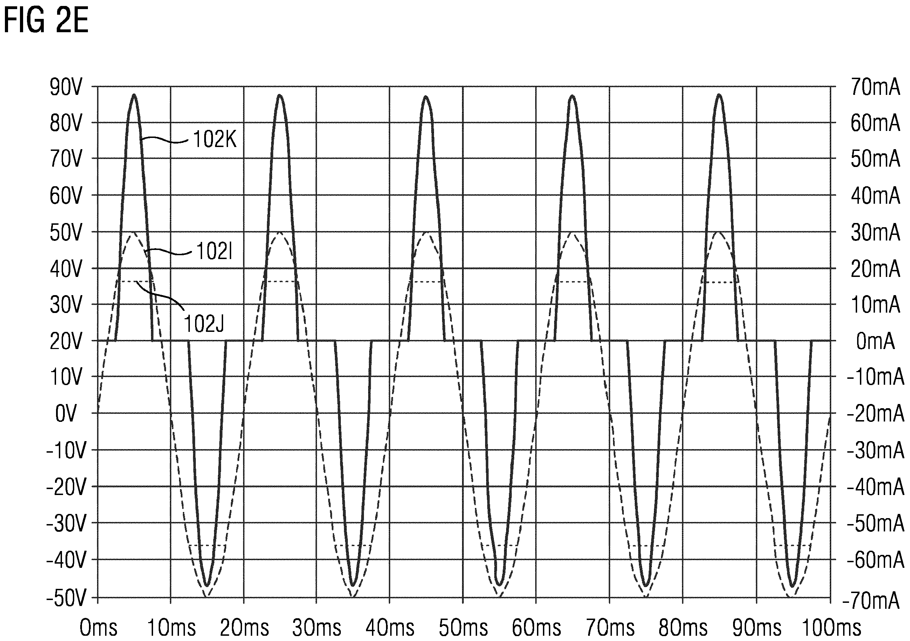

FIG 2E illustrates a graphical representation of voltage waveforms 102I, 102J, and 102K associated with an output voltage $V_{op1}$ of the dynamic burden impedance 102B shown in FIGS 2C-2D. The voltage waveforms 102I, 102J, and 102K are plotted with respect to time and current drawn by the dynamic impedance module 102H. The voltage waveform 102I represents an input voltage that is, the output voltage of the impedance regulation module 102A. The voltage waveform 102J represents the voltage limited by the dynamic burden impedance 102B beyond a voltage threshold of 37V which is achieved with a 36.3V Zener diode in combination with 0.7V $V_{BE}$ drop. The voltage waveform 102K represents the current drawn by the dynamic burden impedance 102B to maintain the output voltage $V_{op1}$ constant.

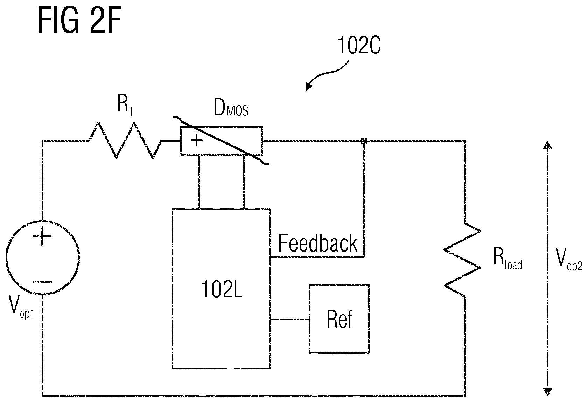

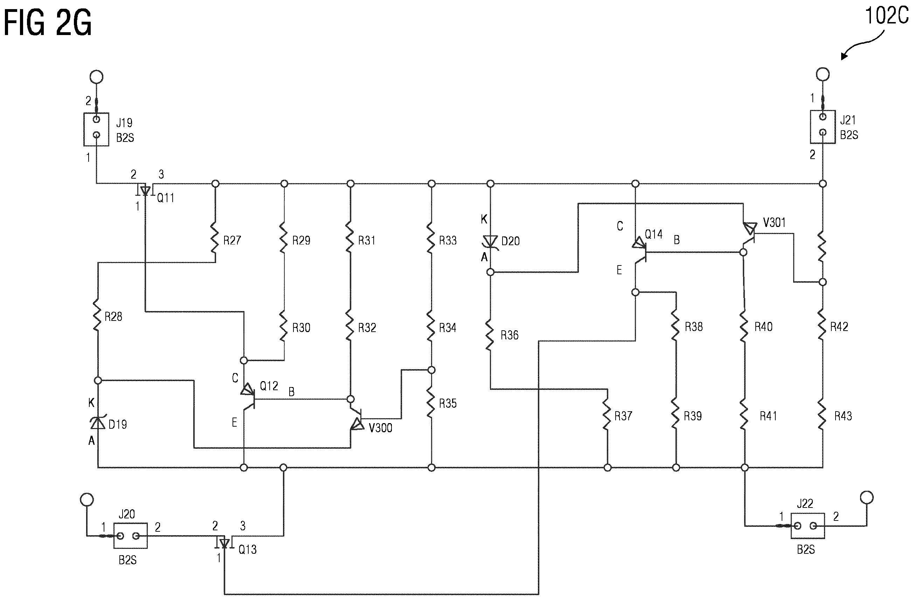

FIG 2F-2G illustrate a block diagram and an electrical equivalent circuit diagram of the voltage limiting module 102C shown in FIG 2A that regulates an output voltage $V_{op2}$ of the power harvesting module 102, based on a predefined load voltage threshold to protect one or more modules of the power network device 100 being powered. FIG 2F illustrates a block diagram of the voltage limiting module 102C comprising a depletion MOSFET $D_{MOS}$ in a normally closed mode of operation in an operable connection with an impedance control module 102L set at a reference voltage equal to the load voltage threshold. When the MOSFET $D_{MOS}$ is in a normally closed mode of operation, that is, when the input voltage is less than the reference voltage, the input voltage is passed to the load with minimal drop. When the input voltage starts increasing, it is applied as feedback through the impedance control module 102L to the MOSFET $D_{MOS}$ thereby, increasing the resistance of the MOSFET $D_{MOS}$ and limiting the voltage seen by the load represented by the resistance $R_{Load}$ to a value defined by the reference voltage. FIG 2G illustrates an electrical equivalent circuit diagram of the voltage limiting module 102C comprising MOSFETs Q11 and Q13 as the MOSFET $D_{MOS}$ for positive and negative half cycles of an AC input voltage. Considering a positive half cycle operation, when an input voltage is applied at Q11 and Q11 is in its normally closed mode, that is, $V_{GS}$ is zero and Q11 is conducting, the input voltage is passed through Q11 and it appears across the Zener D19 via the resistors R27 and R28. If this voltage is less than the breakdown voltage of the Zener D19 then all the voltage appears across the Zener D19 and in turn at the emitter of transistor V300. As the base of V300 sees a stepped down version of this voltage, the V300 doesn't conduct. However, once the voltage becomes higher than the breakdown voltage of the Zener D19, the voltage is clamped by the Zener D19 whereas the voltage at the base of V300 increases as it is derived via a resistance divider and V300 conducts thereby, setting the transistor Q12 into conduction which in turn pulls down the gate voltage of the MOSFET Q11. With this, the drain-source resistance of Q11 increases resulting in a higher drop across Q11 and protecting the load connected at the output of the voltage limiting module 102C. The limiting voltage, that is, the reference voltage as shown in FIG 2F is set using below equation:

$$V_{lim} = \frac{R_{33} + R_{34} + R_{35}}{R_{35}} * (V_{BE}V_{300} + V_Z D_{19})$$

Thus, the limiting voltage is independent of the MOSFET characteristics and only depends on transistor and Zener voltages. Therefore, the voltage limiting module 102C limits the output voltage $V_{op2}$ to $V_{lim}$ thereby, protecting the downstream electronics. The voltage limiting module 102C shown in FIGS 2F and 2G can be employed for AC as well as DC sources with minor modifications in the components used.

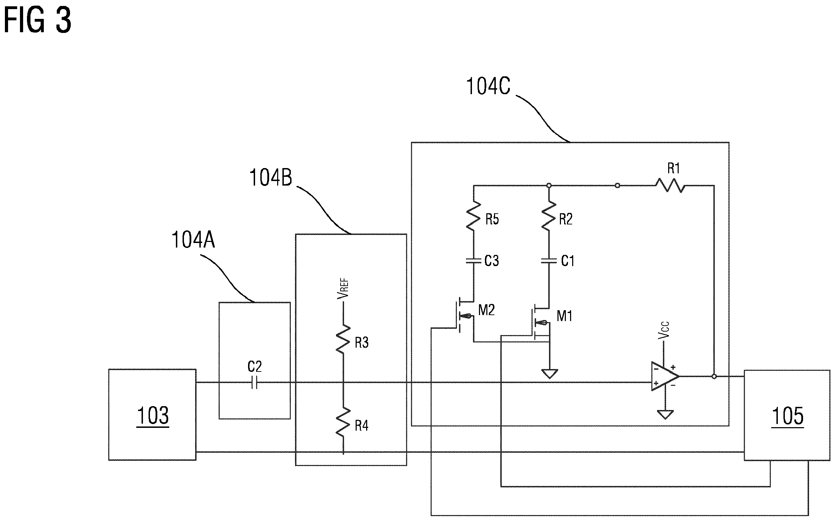

FIG 3 illustrates an electrical equivalent circuit diagram of a parameter conditioning module 104 of the power network device 100 shown in FIG 1. The parameter conditioning module 104 in communication with the processor 105 of the power network device 100 shown in FIG 1, dynamically amplifies one or more parameters using an amplifier module 104C based on one or more properties of a flux concentrator of the sensor module 103. The parameter conditioning module 104 comprises an AC coupler module 104A, an offset module 104B and the amplifier module 104C. The AC coupler module 104A receives an input, for example, the induced voltage $V_{ind}$ harvested by the coil wound flux concentrator of the sensor module 103. The coupler module 104A removes DC component associated with the induced voltage $V_{ind}$. This is because the DC component is typically unknown and/or varies greatly which may lead to saturation of the flux concentrator when amplified with higher gain values. The AC component is then passed to the offset module 104B comprising a resistance divider designed so as to add a DC component predefined based on a reference voltage. The reference voltage is selected so as to ensure that a quiescent operating point of the amplifier module 104C accommodates entire dynamic range of the parameters being measured by the sensor module 103, and minimizes any distortion associated therewith. Thus, the offset module 104B on adding the predefined DC components clamps the input parameter, that is, the induced voltage $V_{ind}$ to a known DC operating point. The amplifier module 104C is a single stage amplifier comprising two or more MOSFETs, for example, M1, M2, etc., as shown in FIG 3, which are switched on or off by the processor 105 so as to select an amplification factor, that is, a gain value with which the induced voltage $V_{ind}$ is amplified. The amplification factor is selected based on saturation tolerance of the flux concentrator core and/or a range of line current $I_L$. The amplified induced voltage $V_{ind}$, is then passed to the processor 105 via an analog to digital converter (not shown) for further processing, for example, detection of a condition of the power network.

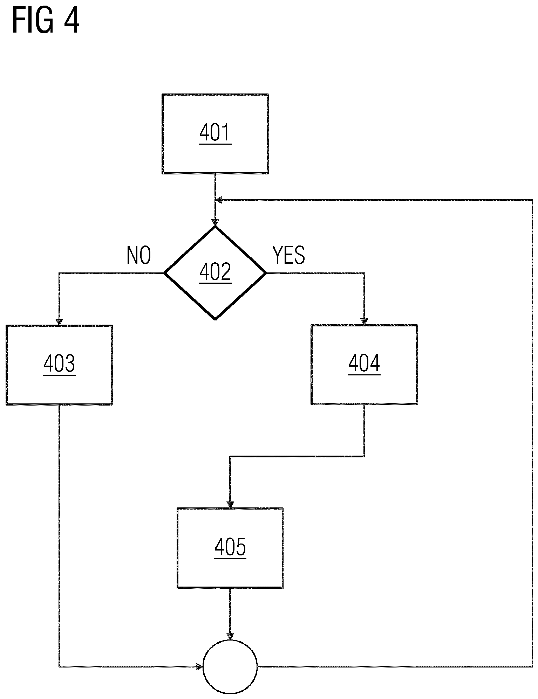

FIG 4 is a process flow chart illustrating a method for dynamically conditioning one or more parameters measured by the power network device 100 shown in FIG 1. The method disclosed herein employs the parameter conditioning module 104 shown in FIG 3 for dynamically conditioning the parameters measured. At step 401, the method selects the highest amplification factor. At step, 402, the method verifies if the core of the flux concentrator of the sensor module 103 is saturated. If not, then at step 403 the amplifier module 104C of the parameter conditioning module 104 amplifies the parameter using the amplification factor. If yes, at step 404, the parameter conditioning module 104 reduces the amplification factor by one to the next lower amplification factor. At step 405, the parameter conditioning module 104 selects the reduced amplification factor and repeats steps 402-404 so long as the core does not saturate. The process flow disclosed herein precludes need to track the changes in the line current $I_L$ and also manual intervention to select an amplification factor, thereby, avoiding calibration during installation and/or change in line current $I_L$.

The foregoing examples have been provided merely for the purpose of explanation and are in no way to be construed as limiting of the present invention disclosed herein.

Further, although the invention has been described herein with reference to particular means, materials, and embodiments, the invention is not intended to be limited to the particulars disclosed herein; rather, the invention extends to all functionally equivalent structures, methods and uses, such as are within the scope of the appended claims.

List of reference numerals:

    100 power network device

101 current carrying conductor

IL line current

LCC inductance offered by coil and the flux concentrator

VS source voltage

LS inductance of the current carrying conductor

RCoil resistance offered by coil

Clim current limiter

Vop1 output voltage of impedance regulation module

Vop2 output voltage of power harvesting module

102 power harvesting module

102A impedance regulation module

102B dynamic burden impedance

102C voltage limiting module

102D switching module

102E power detection module

102F rectifier

102G voltage reference module

102H dynamic impedance module

102I, 102J, 102K voltage waveforms associated with dynamic burden impedance

102L Impedance control module

103 sensor module

104 parameter conditioning module

104A coupler module

104B offset module

104C amplifier module

105 processor/controller

106 indicator module

107 communication module

**Claims**

1. A power network device (100) physically disposable on a current carrying conductor (101), the power network device (100) comprising:

- a sensor module (103) configured to measure one or more parameters associated with the current carrying conductor (101) ;
- a processor (105) configured to detect a condition in the power network based on the one or more parameters; and
- a power harvesting module (102) configured to harvest an induced voltage ($V_{ind}$) proportional to the line current ($I_L$), for powering one or more modules of the power network device (100), wherein the power harvesting module (102) comprises:

  o an impedance regulation module (102A);
  o a dynamic burden impedance (102B) configured as a variable load; and
  o a voltage limiting module (102C)

**characterized in that**
the impedance regulation module (102A) comprises:

a power detection module (102E) configured to detect a power harvested by the power harvesting module (102); a switching module (102D) configured to switch the impedance regulation module (102A) in a first state, if the power detected by the power detection module (102D) is below a predefined threshold ($P_T$), or in a second state, if the power detected by the power detection (102D) module is equal to or exceeds the threshold ($P_T$) ; and a compensation impedance ($Z_C$), wherein in the first state the compensation impedance ($Z_C$) is connected in series with the power harvesting module (102), and wherein in the second state the compensation impedance ($Z_C$) is bypassed.

2. The power network device (100) according to claim 1, wherein the power harvesting module (102) comprises a flux concentrator and at least one coil wound on the flux concentrator to harvest the induced voltage ($V_{ind}$) proportional to the line current ($I_L$).

3. The power network device (100) according to claim 1, wherein the impedance regulation module (102A) is configured to dynamically regulate impedance in the power harvesting module (102) for controlling transfer of power harvested using the induced voltage ($V_{ind}$) and the line current ($I_L$), to one or more modules of the power network device (100).

4. The power network device (100) according to any one of the claims 1 and 3, wherein the compensating impedance (Zc) at least partially nullifies a reactance of a coil of the power harvesting module (102) when power harvested using the induced voltage ($V_{ind}$) and the line current ($I_L$), is less than a predefined power threshold.

5. The power network device (100) according to claim 1, wherein the dynamic burden impedance (102B) is configured to regulate an output voltage ($V_{op1}$) of the impedance regulation module (102A), based on a predefined voltage threshold to maintain flux induced in the power harvesting module (102).

6. The power network device (100) according to claim 1, wherein the voltage limiting module (102C) is configured to regulate an output voltage ($V_{op2}$) of the power harvesting module (102), based on a predefined load voltage threshold to protect one or more modules of the power network device (100) being powered.

7. The power network device (100) according to claim 1, wherein the power harvesting module (102) is configured as a linear mode power supply.

8. The power network device (100) according to claim 1, wherein the sensor module (103) comprises a flux concentrator and at least one coil wound on the flux concentrator to measure the one or more parameters.

9. The power network device (100) according to any one of the previous claims further comprising, a parameter conditioning module (104) configured to dynamically condition the one or more parameters.

10. The power network device (100) according to claim 9,

wherein the parameter conditioning module (104) in communication with the processor (105), is configured to dynamically amplify the one or more parameters using an amplifier module (104C) based on one or more properties of a flux concentrator of the sensor module (103).

11. The power network device (100) according to claim 10,
wherein the amplifier module (104C) is a single-stage amplifier module configurable for a predefined range of amplification factors.

12. The power network device (100) according to any one of the previous claims further comprising a communication module (107) configured to communicate one or more of the condition and the one or more parameters to an external system.

13. The power network device (100) according to any one of the previous claims, further comprising an indicator module (106) configured to indicate the condition.

14. The power network device (100) according to any one of the previous claims, wherein the device is a fault sensor indicator device

**Patentansprüche**

1. Stromnetzvorrichtung (100), die auf einem Strom führenden Leiter (101) physisch verfügbar ist, wobei die Stromnetzvorrichtung (100) aufweist:

   - ein Sensormodul (103), das zum Messen eines oder mehrerer Parameter ausgelegt ist, die mit dem Strom führenden Leiter (101) assoziiert sind;
   - einen Prozessor (105), der zum Detektieren einer Bedingung im Stromnetz basierend auf dem einen oder den mehreren Parametern ausgelegt ist; und
   - ein Stromgewinnungsmodul (102), das zum Gewinnen einer induzierten Spannung ($V_{ind}$) proportional zum Leitungsstrom ($I_L$) zum Speisen eines oder mehrerer Module der Stromnetzvorrichtung (100) ausgelegt ist, wobei das Stromgewinnungsmodul (102) aufweist:

      o ein Impedanzregelungsmodul (102A);
      o eine dynamische Bürdenimpedanz (102B), die als variable Last ausgelegt ist; und
      o ein Spannungsbegrenzungsmodul (102C),

   **dadurch gekennzeichnet, dass**
   das Impedanzregelungsmodul (102A) aufweist:

      ein Stromdetektionsmodul (102E), das zum Detektieren eines Stroms ausgelegt ist, der durch das Stromgewinnungsmodul (102) gewonnen wird;
      ein Schaltmodul (102D), das zum Schalten des Impedanzregelungsmoduls (102A) in einen ersten Zustand, wenn der durch das Stromdetektionsmodul (102D) detektierte Strom unter einer vordefinierten Schwelle ($P_T$) liegt, oder in einen zweiten Zustand ausgelegt ist, wenn der durch das Stromdetektionsmodul (102D) detektierte Strom gleich der vordefinierten Schwelle ($P_T$) ist oder diese überschreitet; und
      eine Kompensationsimpedanz ($Z_C$), wobei die Kompensationsimpedanz ($Z_C$) im ersten Zustand mit dem Stromgewinnungsmodul (102) in Reihe geschaltet ist, und wobei die Kompensationsimpedanz ($Z_C$) im zweiten Zustand überbrückt wird.

2. Stromnetzvorrichtung (100) nach Anspruch 1, wobei das Stromgewinnungsmodul (102) einen Flusskonzentrator und mindestens eine Spule aufweist, die auf den Flusskonzentrator gewickelt ist, um die induzierte Spannung ($V_{ind}$) proportional zum Leitungsstrom ($I_L$) zu gewinnen.

3. Stromnetzvorrichtung (100) nach Anspruch 1, wobei das Impedanzregelungsmodul (102A) so ausgelegt ist, dass es Impedanz im Stromgewinnungsmodul (102) zum Steuern von Übertragung des unter Verwendung der induzierten Spannung ($V_{ind}$) und des Leistungsstroms ($I_L$) gewonnenen Stroms an ein oder mehrere Module der Stromnetzvorrichtung (100) dynamisch regelt.

**4.** Stromnetzvorrichtung (100) nach einem der Ansprüche 1 bis 3, wobei die Kompensationsimpedanz ($Z_c$) eine Reaktanz einer Spule des Stromgewinnungsmoduls (102) wenigstens teilweise aufhebt, wenn der unter Verwendung der induzierten Spannung ($V_{ind}$) und des Leistungsstroms ($I_L$) gewonnene Strom unter einer vordefinierten Stromschwelle liegt.

**5.** Stromnetzvorrichtung (100) nach Anspruch 1, wobei die dynamische Bürdenimpedanz (102B) zum Regeln einer Ausgangsspannung ($V_{op1}$) des Impedanzregelungsmoduls (102A) basierend auf einer vordefinierten Spannungsschwelle ausgelegt ist, um einen im Stromgewinnungsmodul (102) induzierten Fluss aufrechtzuerhalten.

**6.** Stromnetzvorrichtung (100) nach Anspruch 1, wobei das Spannungsbegrenzungsmodul (102C) zum Regeln einer Ausgangsspannung ($V_{op2}$) des Stromgewinnungsmoduls (102) basierend auf einer vordefinierten Lastspannungsschwelle ausgelegt ist, um ein oder mehrere Module der Stromnetzvorrichtung (100) zu schützen, die gespeist werden.

**7.** Stromnetzvorrichtung (100) nach Anspruch 1, wobei das Stromgewinnungsmodul (102) als eine Linearmodus-Stromversorgung ausgelegt ist.

**8.** Stromnetzvorrichtung (100) nach Anspruch 1, wobei das Sensormodul (103) einen Flusskonzentrator und mindestens eine Spule aufweist, die auf den Flusskonzentrator gewickelt ist, um den einen oder die mehreren Parameter zu messen.

**9.** Stromnetzvorrichtung (100) nach einem der vorhergehenden Ansprüche, ferner aufweisend ein Parameterkonditionierungsmodul (104) das zum dynamischen Konditionieren des einen oder der mehreren Parameter ausgelegt ist.

**10.** Stromnetzvorrichtung (100) nach Anspruch 9, wobei das Parameterkonditionierungsmodul (104) in Kommunikation mit dem Prozessor (105) zum dynamischen Verstärken des einen oder der mehreren Parameter unter Verwendung eines Verstärkermoduls (104C) basierend auf einer oder mehreren Eigenschaften eines Flusskonzentrators des Sensormoduls (103) ausgelegt ist.

**11.** Stromnetzvorrichtung (100) nach Anspruch 10, wobei das Verstärkermodul (104C) ein einstufiges Verstärkermodul ist, das für einen vordefinierten Bereich von Verstärkungsfaktoren ausgelegt werden kann.

**12.** Stromnetzvorrichtung (100) nach einem der vorhergehenden Ansprüche, ferner aufweisend ein Kommunikationsmodul (107), das zum Kommunizieren eines oder mehrerer der Bedingung und des einen oder der mehreren Parameter an ein externes System ausgelegt ist.

**13.** Stromnetzvorrichtung (100) nach einem der vorhergehenden Ansprüche, ferner aufweisend ein Indikatormodul (106), das zum Anzeigen der Bedingung ausgelegt ist.

**14.** Stromnetzvorrichtung (100) nach einem der vorhergehenden Ansprüche, wobei die Vorrichtung eine Fehlersensorindikatorvorrichtung ist.

**Revendications**

**1.** Dispositif de réseau de puissance (100) pouvant être placé sur un conducteur de transport de courant (101), le dispositif de réseau de puissance (100) comprenant :

- un module de détection (103) configuré pour mesurer un ou plusieurs paramètres associés au conducteur de transport de courant (101),
- un processeur (105) configuré pour détecter un état dans le réseau de puissance fondé sur le ou les paramètres, et
- un module de recueil de puissance (102) configuré pour recueillir une tension induite ($V_{ind}$) proportionnelle au courant en ligne ($I_L$) afin d'alimenter un ou plusieurs modules du dispositif de réseau de puissance (100), le module de recueil de puissance (102) comprenant :

  ◦ un module de régulation d'impédance (102A),
  ◦ une impédance de charge dynamique (102B) configurée comme une charge variable, et

∘ un module de limitation de tension (102C), **caractérisé en ce que** :

le module de régulation d'impédance (102A) comprend :

un module de détection de puissance (102E) configuré pour détecter la puissance recueillie par le module de recueil de puissance (102), un module de commutation (102D) configuré pour basculer le module de régulation d'impédance (102A) dans un premier état si la puissance détectée par le module de détection de puissance (102D) se trouve en dessous d'un seuil prédéfini ($P_T$), ou bien dans un second état si la puissance détectée par le module de détection de puissance (102D) dépasse ou est égale au seuil ($P_T$), et une impédance de compensation ($Z_c$), où, dans le premier état, l'impédance de compensation ($Z_c$) est reliée en série avec le module de recueil de puissance (102) et où, dans le second état, l'impédance de compensation ($Z_c$) est contournée.

2. Dispositif de réseau de puissance (100) selon la revendication 1, dans lequel le module de recueil de puissance (102) comprend un concentrateur de flux et au moins une bobine enroulée sur le concentrateur de flux pour recueillir la tension induite ($V_{ind}$) proportionnelle au courant en ligne ($I_L$).

3. Dispositif de réseau de puissance (100) selon la revendication 1, dans lequel le module de régulation d'impédance (102A) est configuré pour réguler dynamiquement l'impédance dans le module de recueil de puissance (102) afin de piloter le transfert de puissance recueilli en utilisant la tension induite ($V_{ind}$) et le courant en ligne ($I_L$) vers un ou plusieurs modules du dispositif de réseau de puissance (100).

4. Dispositif de réseau de puissance (100) selon l'une quelconque des revendications 1 et 3, dans lequel l'impédance de compensation ($Z_c$) rend au moins partiellement nulle la réactance d'une bobine du module de recueil de puissance (102) lorsque la puissance recueillie en utilisant la tension induite ($V_{ind}$) et le courant en ligne ($I_L$) est inférieure à un seuil de puissance prédéfini.

5. Dispositif de réseau de puissance (100) selon la revendication 1, dans lequel l'impédance de charge dynamique (102B) est configurée pour réguler la tension de sortie ($V_{op1}$) du module de régulation d'impédance (102A) sur la base d'un seuil de tension prédéfini pour maintenir le flux induit dans le module de recueil de puissance (102).

6. Dispositif de réseau de puissance (100) selon la revendication 1, dans lequel le module de limitation de tension (102C) est configuré pour réguler la tension de sortie ($V_{op2}$) du module de recueil de puissance (102) sur la base d'un seuil de tension de charge prédéfini pour protéger un ou plusieurs modules alimentés du dispositif de réseau de puissance (100).

7. Dispositif de réseau de puissance (100) selon la revendication 1, dans lequel le module de recueil de puissance (102) est configuré comme une alimentation en mode linéaire.

8. Dispositif de réseau de puissance (100) selon la revendication 1, dans lequel le module de détection (103) comprend un concentrateur de flux et au moins une bobine enroulée sur le concentrateur de flux pour mesurer le ou les paramètres.

9. Dispositif de réseau de puissance (100) selon l'une quelconque des revendications précédentes, comprenant en outre un module de conditionnement de paramètres (104) configuré pour conditionner dynamiquement le ou les paramètres.

10. Dispositif de réseau de puissance (100) selon la revendication 9, dans lequel le module de conditionnement de paramètres (104), en communication avec le processeur (105), est configuré pour amplifier dynamiquement le ou les paramètres en utilisant un module amplificateur (104C) fondé sur une ou plusieurs propriétés d'un concentrateur de flux du module de détection (103).

11. Dispositif de réseau de puissance (100) selon la revendication 10, dans lequel le module amplificateur (104C) est un module amplificateur à étage unique configurable pour une plage prédéfinie de facteurs d'amplification.

12. Dispositif de réseau de puissance (100) selon l'une quelconque des revendications précédentes, comprenant en outre un module de communication (107) configuré pour transmettre à un système externe un ou plusieurs des états et le ou les paramètres.

**13.** Dispositif de réseau de puissance (100) selon l'une quelconque des revendications précédentes, comprenant en outre un module indicateur (106) configuré pour indiquer l'état.

**14.** Dispositif de réseau de puissance (100) selon l'une quelconque des revendications précédentes, dans lequel le dispositif est un dispositif d'indication de capteur en défaut.

## FIG 1

FIG 2A

101

$V_S$

$L_S$

$I_L$

$R_{COIL}$

$L_{CC}$

102

102A

102B

$C_{lim}$

102C

# FIG 2B

# FIG 2C

102C

102C

102G

102H

$V_{op1}$

FIG 2D

# FIG 2E

EP 3 557 729 B1

## FIG 2F

102C

R₁  D_MOS

Feedback

102L

Ref

V_op1  R_load  V_op2

FIG 2G

EP 3 557 729 B1

EP 3 557 729 B1

# FIG 3

# FIG 4

**EP 3 557 729 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017179732 A1